Europäisches Patentamt

European Patent Office

Office européen des brevets

(19)

(11) Publication number: **0 269 228**
B1

# EUROPEAN PATENT SPECIFICATION

(12)

(45) Date of publication of the patent specification:
28.11.90

(21) Application number: 87308874.4

(22) Date of filing: 07.10.87

(51) Int. Cl.⁵: **F02B 47/00,** F02B 49/00,
F02M 25/14

(54) Fuel additive metering apparatus.

(30) Priority: 25.11.86 US 934772

(43) Date of publication of application:
01.06.88 Bulletin 88/22

(45) Publication of the grant of the patent:
28.11.90 Bulletin 90/48

(84) Designated Contracting States:
DE FR GB

(56) References cited:
US-A- 2 554 612
US-A- 4 388 893
US-A- 4 422 413
US-A- 4 557 221
US-A- 4 621 593

(73) Proprietor: GENERAL MOTORS CORPORATION,
General Motors Building 3044 West Grand Boulevard,
Detroit Michigan 48202(US)

(72) Inventor: Hoffman, Mark Barrett, 3801 Lakeview,
Orchard Lake Michigan 48033(US)
Inventor: Ryan, Paul Daniel, 42539 Eldon, Mount
Clemens Michigan 48044(US)

(74) Representative: Denton, Michael John et al, Patent
Section Vauxhall Motors Limited 1st Floor Gideon
House 26 Chapel Street, Luton Bedfordshire
LU1 2SE(GB)

## Description

This invention relates to a fuel additive metering apparatus in which an additive is mixed with fuel for delivery to an engine, and a method of operating the apparatus.

The exhaust system of a diesel engine may be equipped with a trap to separate particulates from the engine exhaust gases and thereby reduce emission of particulates into the atmosphere. Such a trap must be regenerated periodically.

Some proposals for trap regeneration involve use of an additive in the fuel consumed by the engine. When the additive passes to the trap in the engine exhaust gases, it catalyzes combustion of the particulates in the trap and thereby facilitates regeneration of the trap. An example of such an arrangement is shown in US patent No. 4,621,593.

It is an object of the present invention to provide a fuel additive metering apparatus by which an additive is mixed with the fuel delivered to an engine in an amount proportional to the amount of fuel consumed by the engine.

To this end, a fuel additive metering apparatus, and a method of operation thereof, in accordance with the present invention, is characterised by the features specified in the characterising portions of claims 1 and 6 respectively.

In a preferred embodiment of the fuel additive metering apparatus provided by this invention, fuel is drawn from a reservoir, a portion of the fuel is delivered to the engine, excess fuel is directed back to the reservoir, fuel is supplied from a tank to the reservoir to maintain a constant volume of fuel in the reservoir, the amount of fuel supplied from the tank to the reservoir is measured, an additive is fed to the reservoir for mixing with the fuel, and the rate at which additive is fed to the reservoir is proportioned to the rate at which fuel is supplied from the tank to the reservoir, whereby the amount of additive consumed by the engine is proportioned to the amount of fuel consumed by the engine.

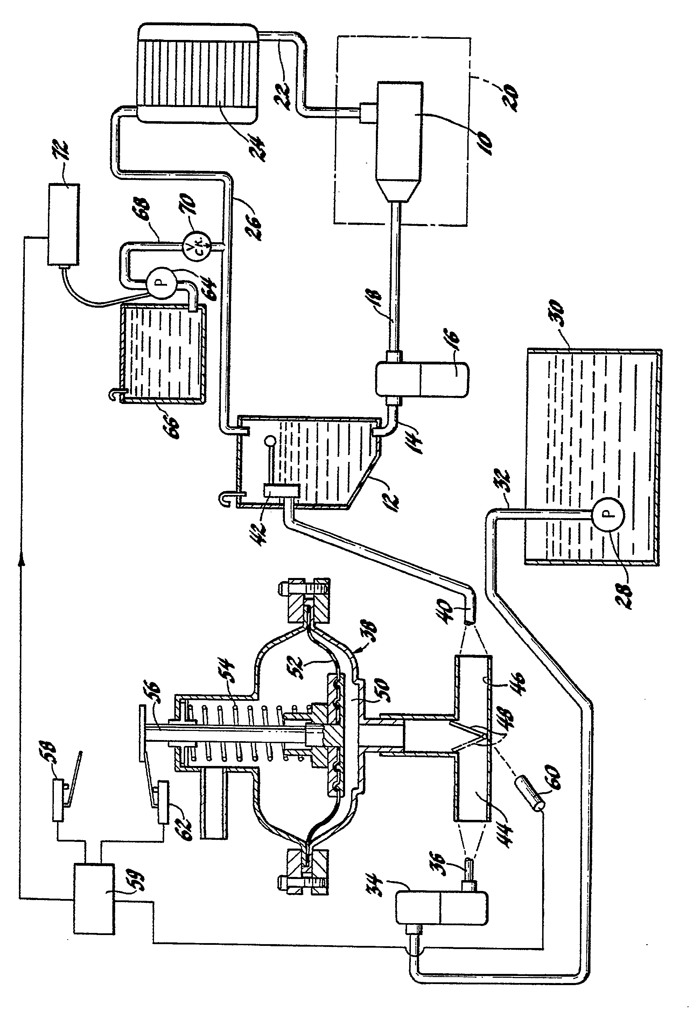

The present invention will now be described, by way of example, with reference to the accompanying drawing, in which the sole figure is a schematic view of a preferred embodiment of the fuel additive metering apparatus provided by this invention.

Referring to the drawing, a fuel apparatus for a diesel engine includes a fuel injection pump 10 that draws fuel from a reservoir 12 through a line 14, a filter 16 and a line 18, delivers a portion of the fuel to the engine 20, and directs excess fuel through a line 22, a fuel cooler 24 and a return line 26 back to the reservoir 12.

A supply pump 28 delivers fuel from a tank 30 through a line 32, a water separator 34, a line 36, a fuel metering unit 38 and a line 40 to the reservoir 12. The inlet from line 40 to the reservoir 12 is controlled by a float valve 42 (admitting means) to maintain a constant volume of fuel in the reservoir 12.

The fuel metering unit 38 has an inlet 44 that receives fuel through the line 36 from the supply pump 28, and an outlet 46 that directs fuel through the line 40 to the reservoir 12. A valve 48 alternately allows fuel to flow into the fuel metering unit 38 through the inlet 44, and to flow out of the fuel metering unit through the outlet 46. With the valve 48 in the position shown by solid lines, the supply pump 28 causes fuel to flow through the inlet 44 to a chamber 50 closed by a diaphragm 52. The fuel raises the diaphragm 52 against the bias of a spring 54 until a shaft 56 carried by the diaphragm 52 closes a switch 58.

When a controller 59 senses closure of the switch 58, it energizes a solenoid 60 to move the valve 48 from the solid line position to the position shown by dotted lines. The bias of the spring 54 then lowers the diaphragm 52 and causes fuel to flow from the chamber 50 through the outlet 46 to the reservoir 12 until the shaft 56 closes a switch 62. When the controller 59 senses closure of the switch 62, it deenergizes the solenoid 60 to move the valve 48 from the dotted line position to the solid line position.

The supply pump 28 then causes additional fuel to flow through the inlet 44 to the chamber 50.

Movement of the diaphragm 52 from the position where the shaft 56 closes the switch 58 to the position where the shaft 56 closes the switch 62 displaces a calibrated amount of fuel to the reservoir 12. The float valve 42 in the reservoir 12 admits fuel to the reservoir only as the fuel injection pump 10 delivers fuel to the engine 20, and the frequency of operation of the diaphragm 52 and the switches 58 and 62 (which define switching means) accordingly indicates the rate at which fuel is delivered to the engine 20.

A positive displacement pump or additive pump 64 feeds additive from a tank 66 through a line 68 and a check valve 70 into the return line 26 and thus to the reservoir 12 where the additive mixes with the fuel. A controller 72 (controlling means) operates the additive pump 64 in response to operation of the switch 62, proportioning the rate at which additive is fed to the reservoir 12 to the rate at which fuel is delivered by the supply pump 28 to the reservoir 12, and thereby proportioning the amount of additive delivered to the engine 20 to the amount of fuel consumed by the engine.

The fuel additive metering apparatus provided by this invention thereby creates a precisely proportioned blend of additive and fuel for delivery to the engine.

It will be noted that the fuel additive metering apparatus provided by this embodiment of the present invention also assures that the additive will not come into contact with fuel that contains water. Any water that may be present in the fuel delivered from the tank 30 is separated in the water separator 34 so the additive may be mixed with water-free fuel in the reservoir 12.

It will be further noted that the fuel additive metering apparatus provided by this invention minimizes the time during which the additive must remain mixed with the fuel. By mixing the additive with the fuel in the reservoir 12 instead of the tank 30, the additive is mixed with fuel in a minimum volume portion of the fuel apparatus, and the residence time of the additive in the fuel is minimized accordingly.

## Claims

1. A fuel additive metering apparatus for an engine (20) having a fuel injection pump (10), the fuel additive metering apparatus comprising a fuel supply including a reservoir (12) and an additive pump (64) for delivering an additive to the reservoir for mixing with the fuel therein, the fuel injection pump being capable of drawing fuel from the fuel supply, delivering a portion of the fuel to the engine, and directing excess fuel back to the fuel supply; a fuel metering unit (38) measuring the rate at which additional fuel is admitted to the reservoir; and controlling means (72) for controlling the additive pump to proportion the rate at which additive is fed to the reservoir to the rate at which such additional fuel is admitted to the reservoir, whereby the amount of additive delivered to the engine is proportioned to the amount of fuel consumed by the engine; characterised by admitting means (42) for controlling admission of the additional fuel to the reservoir to maintain a substantially constant volume of fuel therein; by a separate tank (30) for delivering the additional fuel to the reservoir; and in that fuel in the reservoir is not returned to the tank.

2. A fuel additive metering apparatus as claimed in claim 1, comprising a return line (26) for directing excess fuel from the fuel injection pump (10) back to the reservoir (12), the additive pump (64) delivering the additive through the return line to the reservoir.

3. A fuel additive metering apparatus as claimed in claim 1 or claim 2, wherein the fuel metering unit (38) comprises an inlet (44) that receives such additional fuel under pressure from the tank (30); an outlet (46) that directs such additional fuel to the reservoir (12); and a valve (48) that alternately allows such additional fuel to flow into the fuel metering unit through the inlet and to flow out of the fuel metering unit through the outlet, the fuel metering unit also having a chamber (50) closed by a diaphragm (52) and a spring (54) biasing the diaphragm in a direction for discharging fuel from the chamber, the diaphragm being displaced against the bias of the spring by the pressure of the source of fuel when the valve allows fuel to flow through the inlet, the diaphragm carrying a shaft (56) that operates switch means (58, 62) when said diaphragm is fully displaced against the bias of the spring, a solenoid (60) responsive to the operation of the switch means for causing the valve to allow fuel to flow through the outlet and thereby allowing the spring to displace the diaphragm in the fuel discharging direction, the shaft further operating the switch means when the diaphragm is fully displaced in the fuel discharging direction, the solenoid being responsive to the further operation of the switch means for causing the valve to allow fuel to flow through the inlet, and wherein the controlling means (72) is responsive to operation of the switch means.

4. A fuel additive metering apparatus as claimed in any one of the preceding claims, comprising a water separator (34) positioned between the tank (30) and the reservoir (12) through which the additional fuel passes before admission to the reservoir.

5. A method of operating a fuel additive metering apparatus for an engine, the method comprising the steps of drawing fuel from a reservoir (12); delivering a portion of the fuel to the engine (20) and directing excess fuel back to the reservoir; delivering additional fuel to the reservoir; measuring the rate at which such additional fuel is admitted to the reservoir; delivering an additive to the reservoir for mixing with the fuel therein; and proportioning the rate at which additive is fed to the reservoir to the rate at which such additional fuel is admitted to the reservoir, whereby the amount of additive delivered to the engine is proportioned to the amount of fuel consumed by the engine; characterised by controlling admission of the additional fuel to the reservoir to maintain a substantially constant volume of fuel therein; by delivering the additional fuel to the reservoir from a separate tank (30); and by preventing return of fuel from the reservoir to the tank.

6. A method as claimed in claim 5, wherein the additional fuel is delivered to the reservoir (12) from the tank (30) through a water separator (34).

## Revendications

1. Appareil de dosage d'additif de combustible pour un moteur (20) comportant une pompe d'injection de combustible (10), cet appareil comportant une alimentation en combustible comprenant une cuve (12) et une pompe d'additif (64) pour fournir un additif à la cuve pour être mélangé au combustible dans celle-ci, la pompe d'injection de combustible étant apte à aspirer du combustible à partir de l'alimentation en combustible, à distribuer une partie du combustible au moteur, et à renvoyer le surplus à l'alimentation en combustible; un ensemble (38) de dosage de combustible mesurant le débit auquel du combustible additionnel est admis dans la cuve; et un dispositif de commande (72) pour commander la pompe d'additif afin de proportionner le débit auquel l'additif est distribué à la cuve su débit d'admission du combustible supplémentaire dans la cuve, de sorte que la quantité d'additif distribuée au moteur est proportionnelle à la quantité de combustible consommée par le moteur, caractérisé en ce qu'il comprend un dispositif d'admission (42) pour commander l'admission du combustible additionnel à la cuve afin de maintenir un volume à peu près constant de combustible dans celle-ci, et un réservoir séparé (30) pour distribuer le combustible supplémentaire à la cuve, et en ce que le combustible de la cuve n'est pas renvoyé au réservoir.

2. Appareil de dosage d'additif de combustible suivant la revendication 1, comprenant une canalisation de retour (26) pour renvoyer à la cuve (12) le surplus de combustible provenant de la pompe d'injection de combustible (10), la pompe d'additif (64) distribuant l'additif par l'intermédiaire de la canalisation de retour à la cuve.

3. Appareil de dosage d'additif de combustible suivant la revendication 1 ou 2, caractérisé dans lequel l'ensemble (38) de dosage de combustible comprend une entrée (44) qui reçoit le combustible additionnel sous pression provenant du réservoir (30), une sortie (46) qui dirige ce combustible additionnel vers la cuve (12); et un clapet (48) qui permet au combustible additionnel de s'écouler dans l'ensemble de dosage de combustible par l'entrée ou, alternativement, de sortir de l'ensemble de dosage de combustible par la sortie, l'ensemble de dosage de combustible comportant également une chambre (50) fermée par une membrane (52), et un ressort (54) sollicitant la membrane dans une direction permettant l'échappement du combustible de la chambre, la membrane étant déplacée à l'encontre de la sollicitation du ressort par la pression de la source de combustible lorsque le clapet permet à ce dernier de s'écouler à travers l'entrée, la membrane portant une tige (56) qui actionne un dispositif d'interrupteurs (58, 62) lorsque cette membrane est complètement déplacée à l'encontre de la sollicitation du ressort, un électroaimant (60) fonctionnant en réponse à l'actionnement du dispositif d'interrupteurs pour astreindre le clapet à permettre au combustible de s'écouler par la sortie et permettre ainsi au ressort de déplacer la membrane dans le sens de l'échappement du combustible, la tige actionnant en outre le dispositif d'interrupteurs lorsque la membrane est complètement déplacée dans le sens de l'échappement du combustible, l'électroaimant fonctionnant en réponse à un nouvel actionnement du dispositif d'interrupteurs pour astreindre le clapet à permettre au combustible de s'écouler par l'entrée, le dispositif de commande (72) agissant en réponse à l'actionnement du dispositif d'interrupteurs.

4. Appareil de dosage d'additif de combustible suivant l'une quelconque des revendications précédentes, comprenant un séparateur d'eau (34) disposé entre le réservoir (30) et la cuve (12), à travers lequel passe le combustible additionnel avant d'être admis dans la cuve.

5. Procédé d'actionnement d'un appareil de dosage d'additif de combustible pour moteur, comprenant les phases consistant à aspirer du combustible en provenance d'une cuve (12); à distribuer une partie du combustible au moteur (20) et à renvoyer le surplus de combustible dans la cuve; à distribuer du combustible additionnel à la cuve; à mesurer le débit d'admission du combustible additionnel dans la cuve; à distribuer un additif à la cuve pour être mélangé au combustible qu'elle contient; et à proportionner le débit auquel l'additif est amené dans la cuve au débit d'admission du combustible additionnel dans cette cuve, de sorte que la quantité d'additif distribuée au moteur est proportionnée à la quantité de combustible consommée par celui-ci, caractérisé en ce qu'on commande l'admission du combustible additionnel dans la cuve afin de maintenir dans celle-ci un volume à peu près constant de combustible; en ce qu'on distribue de combustible additionnel dans la cuve à partir d'un réservoir distinct (30); et en ce qu'en empêche un retour de combustible de la cuve dans le réservoir.

6. Procédé suivant la revendication 5, dans lequel le combustible additionnel est distribué dans la cuve (12) à partir du réservoir (30) à travers un séparateur d'eau (34).

**Patentansprüche**

1. Treibstoffzusatz-Zumeßvorrichtung für eine Maschine (20) mit einer Treibstoff-Einspritzpumpe (10), wobei die Treibstoffzusatz-Zumeßvorrichtung umfaßt eine Treibstoffversorgung einschließlich eines Behälters (12) und eine Zusatzmittel-Pumpe (64) zum Zuliefern eines Zusatzes zum Behälter zum Mischen mit dem darin enthaltenen Treibstoff, wobei die, Treibstoff-Einspritzpumpe fähig ist, Treibstoff von dem Treibstoffvorrat abzuziehen, einen Anteil des Treibstoffs der Maschine zuzuliefern und überschüssigen Treibstoff zu der Treibstoffversorgung zurückzuleiten, eine Treibstoffzumeßeinheit (38), welche die Rate mißt, mit der zusätzlicher Treibstoff zu dem Behälter zugelassen wird, und Steuermittel (72) zum Steuern der Zusatzmittel-Pumpe, um die Rate, mit der Zusatz zu dem Behälter hinzugeführt wird, zu der Rate proportional zu halten, mit der solcher zusätzlicher Treibstoff zu dem Behälter zugelassen wird, wodurch die Menge des Zusatzes, die der Maschine zugeliefert wird, zu der durch die Maschine verbrauchten Treibstoffmenge proportional gehalten wird; gekennzeichnet durch Zulaßmittel (42) zum Steuern des Zulassens von zusätzlichem Treibstoff zu dem Behälter, um ein im wesentlichen konstantes Treibstoffvolumen darin aufrechtzuerhalten, durch einen separaten Tank (30) zum Zuliefern des zusätzlichen Treibstoffs zu dem Behälter, und dadurch, daß Treibstoff in dem Behälter nicht zu dem Tank zurückgeführt wird.

2. Treibstoffzusatz-Zumeßvorrichtung nach Anspruch 1, mit einer Rückleitung (26), um überschüssigen Treibstoff von der Treibstoff-Einspritzpumpe (10) zu dem Behälter (12) zurückzuleiten, wobei die Zusatzmittel-Pumpe (64) den Zusatz durch die Rückleitung zu dem Behälter liefert.

3. Treibstoffzusatz-Zumeßvorrichtung nach Anspruch 1 oder 2, bei der die Treibstoffzumeßeinheit (38) einen Einlaß (44) umfaßt, der solchen zusätzlichen Treibstoff unter Druck von dem Tank (30) erhält; einen Auslaß (46), der solchen zusätzlichen Treibstoff zu dem Behälter (12) leitet, und ein Ventil (48), das abwechselnd solchen zusätzlichen Treibstoff durch den Einlaß in die Treibstoffzumeßeinheit einströmen läßt und aus der Treibstoffzumeßeinheit durch den Auslaß ausströmen läßt, wobei die Treibstoffzumeßeinheit auch eine durch eine Membran (52) abgeschlossene Kammer (50) und eine die Membran in eine Auslaßrichtung für den Treibstoff aus der Kammer vorspannende Feder (54) umfaßt, die Membran durch den Druck der Treibstoffquelle gegen die Vorspannung der Feder verschoben wird, wenn das Ventil Treibstoff durch den Einlaß fließen läßt, die Membran eine Welle (56) trägt, die Schaltermittel (58, 62) betätigt, wenn die Membran gegen die Vorspannung der Feder vollständig verschoben ist, ein auf die Betätigung des Schaltermittels reagierender Elektromagnet (60) vorgesehen ist, der das Ventil Brennstoff durch den Auslaß fließen und dadurch die Feder die Membran in Treibstoffauslaßrichtung verschieben läßt, wobei die Welle weiter das Schaltermittel betätigt, wenn die Membran vollständig in Treibstoffauslaßrichtung verschoben ist, der Elektromagnet auf den weiteren Betrieb des Schaltermittels reagiert, um das Ventil Treibstoff durch den Einlaß fließen zu lassen, und wobei das Steuermittel (72) auf den Betrieb des Schaltermittels reagiert.

4. Treibstoffzusatz-Zumeßvorrichtung nach einem der vorangehenden Ansprüche, mit einem zwischen dem Tank (30) und dem Behälter (12) eingesetzten Wasserabscheider (34), durch den der zusätzliche Treibstoff vor Zulassung zu dem Behälter hindurchtritt.

5. Verfahren zum Betreiben einer Treibstoffzusatz-Zumeßvorrichtung für eine Maschine, wobei bei dem Verfahren Treibstoff aus einem Behälter (12) abgezogen wird; ein Anteil des Treibstoffs zur Maschine (20) geliefert und überschüssiger Treibstoff zu dem Behälter zurückgeleitet wird; zusätzlicher Treibstoff zu dem Behälter geliefert wird; die Rate gemessen wird, mit der solcher zusätzlicher Treibstoff zu dem Behälter zugelassen wird; ein Zusatz zu dem Behälter geliefert wird, um ihn mit dem darin enthaltenen Treibstoff zu vermischen; und die Rate, mit der der Zusatz zu dem Behälter geliefert wird, mit der Rate in Proportion gesetzt wird, mit der der zusätzliche Treibstoff zu dem Behälter zugelassen wird, wodurch die Menge des der Maschine zugelieferten Zusatzes zu der Menge des durch die Maschine verbrauchten Treibstoffs in Proportion gesetzt wird, dadurch gekennzeichnet, daß das Zulassen des zusätzlichen Treibstoffes zu dem Behälter zur Aufrechterhaltung eines im wesentlichen konstanten Treibstoffvolumens darin gesteuert wird, daß der zusätzliche Treibstoff zu dem Behälter von einem separaten Tank (30) zugeliefert wird und daß die Rückleitung von Treibstoff von dem Behälter zu dem Tank verhindert wird.

6. Verfahren nach Anspruch 5, bei dem der zusätzliche Treibstoff zu dem Behälter (12) von dem Tank (30) über einen Wasserabscheider (34) geliefert wird.